# EUROPÄISCHE PATENTSCHRIFT

(11) **EP 1 213 524 B1**
(45) Veröffentlichungstag und Bekanntmachung des Hinweises auf die Patenterteilung: **20.09.2006**
(21) Anmeldenummer: 01128953.5
(22) Anmeldetag: 06.12.2001
(51) Int. Cl.: F16L 29/00, F16L 37/30, F16L 37/32

(54) **Kupplungsvorrichtung zur Übertragung von Fluiddruck**
Coupling device for transferring fluid pressure
Dispositif d'accouplement de transfert de pression de fluide

(30) Priorität: 08.12.2000 DE 10061953
(43) Veröffentlichungstag der Anmeldung: 12.06.2002
(73) Patentinhaber: Römheld Beteiligungsgesellschaft mbH, 35321 Laubach (DE)
(72) Erfinder: Marquart, Uwe, 78351 Bodman (DE)
(74) Vertreter: von Ahsen, Erwin-Detlef

(56) Entgegenhaltungen:
- DE-A- 2 209 825
- GB-A- 2 282 657
- US-A- 2 678 834
- US-A- 3 367 366
- US-A- 4 852 611
- PATENT ABSTRACTS OF JAPAN vol. 1997, no. 09, 30. September 1997 (1997-09-30) & JP 09 119567 A (IWAI KIKAI KOGYO KK), 6. Mai 1997 (1997-05-06)

## Beschreibung

Die Erfindung betrifft eine Kupplungsvorrichtung zur Übertragung von Fluiddruck von einem ersten Kupplungselement auf ein zweites Kupplungselement, wobei beide Kupplungselemente einander zugewandte Stirnflächen aufweisen, die gegeneinander bewegbar sind, und wobei jedes der Kupplungselemente einen Hohlraum aufweist, der in einer Öffnung an der Stirnfläche mündet und mit dem Hohlraum des anderen Kupplungselementes zur Übertragung von Fluiddruck koppelbar ist, wobei in jedem der Hohlräume ein Kolben in Axialrichtung beweglich geführt ist, wobei die beiden Hohlräume an der dem jeweils anderen Kupplungselement zugewandten Seite eine Dichtfläche aufweisen, die mit der Öffnung der Stirnfläche verbunden ist und gegen die der Kolben mit einer Gegenfläche abdichtbar ist, wobei jeder der beiden Kolben in Richtung auf den anderen Kolben durch eine Vorspanneinrichtung auf eine Dichtstellung hin vorgespannt ist, in der der Kolben jeweils mit seiner Dichtfläche an der Gegenfläche anliegt, und wobei Mittel zur Bewegung mindestens eines Kolbens entgegen der Wirkung der Vorspanneinrichtung in Richtung auf eine Offenstellung vorgesehen sind, in der ein Fluiddurchlaß zur Übertragung von Fluiddruck durch den Hohlraum und die Öffnung in der Stirnfläche des einen Kupplungselementes in die Öffnung an der Stirnfläche des anderen Kupplungselementes freigegeben ist.

Eine derartige Kupplungsvorrichtung ist aus der DE 32 28 140 A1 bekannt.

Bei der bekannten Kupplungsvorrichtung stehen die beiden Kolben in der Dichtstellung jeweils nach außen über die Dichtfläche hervor und dichten so mit ihrer Kegelfläche an einer entsprechend geformten Innenkonusfläche des Hohlraums des Kupplungselementes ab.

Das Öffnen der so gebildeten Ventile erfolgt, indem die beiden Kupplungselemente mit ihrer Dichtfläche gegeneinander bewegt werden, wodurch die beiden Kolben mit ihrer Stirnfläche in Anlage gelangen und somit gegenüber ihrer Dichtstellung axial verschoben werden, so daß ein Fluiddurchlaß zwischen der Außenoberfläche der Kolben und der Innenoberfläche der jeweiligen Hohlräume der Kupplungselemente freigegeben wird.

Die bekannte Kupplungsvorrichtung dient zur Verbindung von Schlauch- oder Rohrleitungen für die Druckmittelversorgung von Maschinen und Teilen von Maschinen, insbesondere in bergmännischen Abbaubetrieben.

Ein Nachteil der bekannten Anordnung besteht darin, daß die Kupplung beim Aneinanderfügen der beiden Kupplungselemente durch Axialbewegung der Kolben unmittelbar geöffnet wird, und zwar bevor eine dichtende Verbindung zwischen den beiden Kupplungselementen hergestellt wird. Dies hat zur Folge, daß vor der Herstellung einer geschlossenen Verbindung zwischen beiden Kupplungselementen Fluid, also beispielsweise Öl, an der Kupplungsstelle austreten kann, was sich nachteilig auswirkt.

Derartige Kupplungsvorrichtungen sind bei vielfältigen Anwendungen nötig, um einen Fluiddruck von einem Kupplungselement auf ein anderes Kupplungselement zu übertragen. So ist es bspw. in der Spannhydraulik üblich, daß hydraulische Spanneinheiten von der Ölzufuhr getrennt werden müssen. Dies erfolgt z.B. bei hydraulischen Wechseleinheiten, wie etwa bei Spannadaptern oder Spannfuttern auf den verschiedensten Bearbeitungsmaschinen. Dazu sind selbstdichtende Kupplungselemente notwendig, mit denen der Hydraulikdruck übertragen wird. Dabei soll die Kupplungsvorrichtung möglichst tolerant gegenüber radialen Positionierfehlern der beiden Kupplungselemente zueinander sein.

Der Erfindung liegt somit die Aufgabe zugrunde, eine verbesserte Kupplungsvorrichtung zur Übertragung von Fluiddruck von einem ersten Kupplungselement auf ein zweites Kupplungselement zu schaffen, die beim Trennen der beiden Kupplungselemente voneinander selbstdichtend ist.

Aus der US-A-2 678 834 ist eine weitere Kupplungsvorrichtung gemäß dem Oberbegriff von Anspruch 1 bekannt, bei der zur Übertragung des Fluidmediums von einem Kupplungselement zum anderen Kupplungselement gleichfalls axial bewegliche Kolben verwendet werden, mittels derer eine jeweilige Durchflussöffnung verschlossen werden kann. Das Öffnen und schließen der Kupplung wird hierbei jedoch durch mechanische Elemente einer Nockenverbindung an der Kupplung gewährleistet.

Vor diesem Hintergrund der Erfindung die Aufgabe zu Grunde, eine verbesserte Kupplungsvorrichtung zur Übertragung von Fluiddruck von einem ersten Kupplungselement auf ein zweites Kupplungselement zu schaffen, die bei trennen der beiden Kupplungselemente voneinander selbstdichtend ist und bei der die Fluidübertragung zwischen den Kupplungselementen selbstständig durch Steuerung des Fluiddruckes ermöglicht wird.

Diese Aufgabe wird bei einer Kupplungsvorrichtung gemäß der eingangs genannten Art dadurch gelöst, dass die Mittel einen Stauraum umfassen, der derart angeordnet und dimensioniert ist, dass ausschließlich durch eine Beaufschlagung mit einem Fluiddruck ausreichender Größe eine Bewegung eines Kolbens entgegen der Wirkung der Vorspanneinrichtung in die Offenstellung bewirkt wird.

Die Aufgabe wird auf diese Weise vollkommen gelöst.

Erfindungsgemäß wird der Fluiddruck selbst genutzt, um bei aneinander anliegenden Kupplungselementen eine axiale Kolbenverschiebung in die Offenstellung zu bewirken, um so den Fluidkanal zwischen beiden Kupplungselementen freizugeben.

Ferner wird es ermöglicht, daß sich die Kolben jeweils unter der Wirkung ihrer Vorspanneinrichtung beim Trennen der beiden Kupplungselemente voneinander in ihre Dichtstellung bewegen, so daß jedes der beiden Kupplungselemente abgedichtet wird. Dabei kann durch eine bündige bzw. versenkte Anordnung der Kolben gewährleistet werden, daß keine Teile gegenüber der Stirnfläche hervorstehen. Dadurch wird die Beschädigungsgefahr und Verschmutzungsgefahr für die Kupplungselemente erheblich reduziert. Gleichfalls wird vermieden, daß bei bereits druckführenden Zu- und Ableitungen während der Herstellung der Kupplungsverbindung Fluid austreten kann.

Es ist zwar aus der DE-A-2 209 825 ein Durchflußsteuerventil bekannt, bei dem ein Stauraum vorgesehen ist, der bei Beaufschlagung mit Fluiddruck eine gewisse Kraft entgegen der Kraft einer Vorspanneinrichtung ausübt.

Die Erfindung ist hierdurch jedoch nicht nahegelegt, da bei dem vorbekannten Ventil ein externes Druckmedium von außen zugeführt wird, mittels dessen die Bewegung des Kolbens in die Offenstellung bewirkt wird.

Gemäß einer Weiterbildung der Erfindung ist an zumindest einem der beiden Kupplungselemente der Kolben an seinem dem anderen Kupplungselement zugewandten Ende durch einen Kopfabschnitt abgeschlossen, an dem seitlich die mit der Dichtfläche zusammenwirkende Gegenfläche ausgebildet ist, und der stirnseitig durch eine Kopffläche abgeschlossen ist, die dem anderen Kupplungselement zugewandt ist.

Auf diese Weise kann der Fluiddruck, der sich in der Offenstellung durch einen Spalt zwischen Gegenfläche und Dichtfläche fortpflanzen kann, durch die Öffnung des einen Kupplungselementes hinaus auf die Kopffläche des anderen Fluidelementes wirken, um dieses so entgegen der Wirkung seiner Vorspanneinrichtung in die Offenstellung zu verschieben. Somit kann durch den Fluiddruck des einen Kupplungselementes, das den Fluiddruck liefert, der Kolben des anderen Kupplungselementes in die Offenstellung bewegt werden. Auf diese Weise schließt sich das den Fluiddruck empfangende Kupplungselement selbsttätig unter der Wirkung seiner Vorspanneinrichtung, wenn das den Fluiddruck speisende Kupplungselement geschlossen wird bzw. von dem anderen Kupplungselement entfernt wird.

In einer vorteilhaften Weiterbildung dieser Ausführung ist die Kopffläche in der Dichtstellung annähernd bündig mit oder versenkt gegenüber den Stirnflächen des Kupplungselementes ausgerichtet.

Dies erlaubt die Ausbildung von vollständig ebenen Oberflächen der Kupplungselemente, so daß die Verschmutzungsgefahr der Kupplungselemente weitgehend reduziert ist.

Gemäß einer Weiterbildung der Erfindung weist bei zumindest einem der beiden Kupplungselemente der Kolben einen zentralen Fluidkanal auf, der über mindestens einen Verbindungskanal mit einem Stauraum in Verbindung steht, der zwischen der Wandung des Hohlraums und dem Kolben gebildet ist, um bei Beaufschlagung mit Fluiddruck eine Bewegung des Kolbens entgegen der Wirkung der Vorspanneinrichtung in die Offenstellung zu bewirken, in der ein Fluiddurchlaß aus dem zentralen Fluidkanal über den Verbindungskanal, den Stauraum und einen Spalt zwischen der Dichtfläche und der Gegenfläche zur Öffnung an der Stirnfläche des anderen Kupplungselementes besteht.

Auf diese Weise ergibt sich eine besonders einfache und zuverlässige Konstruktion.

Gemäß einer weiteren Ausführung der Erfindung ist an zumindest einem der beiden Kupplungselemente die Vorspanneinrichtung als Federelement ausgebildet, das zwischen dem Kolben und einem auf der dem anderen Kupplungselement abgewandten Seite an der Wandung des Hohlraums festgelegten, vorzugsweise topfförmigen Abschlußelement eingespannt ist.

Dies stellt eine besonders einfache Möglichkeit zur Realisierung der Vorspanneinrichtung dar.

In zusätzlicher Weiterbildung dieser Ausführung weist das Abschlußelement an seiner dem anderen Kupplungselement zugewandten Seite eine Anschlagfläche auf, die mit einer dieser zugewandten Radialfläche des Kolbens zusammenwirkt, um die Bewegung des Kolbens entgegen der Wirkung der Vorspanneinrichtung zu begrenzen.

Durch diese Maßnahme läßt sich eine Hubbegrenzung für den Kolben auf besonders einfache Weise realisieren.

Gemäß einer weiteren Ausgestaltung der Erfindung weist an zumindest einem der Kupplungselemente der Kolben an seinem dem anderen Kupplungselement abgewandten Ende einen hohlzylindrischen Fortsatz auf, dessen Außenoberfläche in einer Bohrung des topfförmigen Abschlußelementes verschiebbar und gegenüber dieser abgedichtet geführt ist.

Durch diese Maßnahmen läßt sich die Fluiddruckübertragung durch den zentralen Fluidkanal innerhalb des hohlzylindrischen Fortsatzes bis in den Stauraum auf einfache Weise gewährleisten.

In zusätzlicher Weiterbildung der Erfindung ist an zumindest einem der Kupplungselemente die Dichtfläche am Ende des Hohlraums als Innenkonusfläche ausgebildet, die sich an den Stauraum anschließt und in der Öffnung an der Stirnfläche des Kupplungselementes mündet, wobei die Gegenfläche des Kolbens als entsprechend geformte konusförmige Außenfläche ausgebildet ist.

Auf diese Weise läßt sich der Durchlaß zwischen dem Stauraum und zwischen der Dichtfläche und der Gegenfläche auf besonders einfache Weise realisieren.

In zusätzlicher Weiterbildung der Erfindung ist an zumindest einem der Kupplungselemente der Hohlraum in einem Kupplungseinsatz ausgebildet, der in einer Ausnehmung eines Grundkörpers aufgenommen ist.

Durch diese Maßnahme wird die Montage der betreffenden Teile am Kupplungselement erheblich vereinfacht.

Gemäß einer weiteren Ausführung der Erfindung ist an einem der beiden Kupplungselemente an der Stirnfläche ein Dichtungselement, vorzugsweise ein Dichtring vorgesehen, das den Bereich um die beiden Öffnungen herum in der Dichtstellung nach außen abdichtet.

Liegen die beiden Stirnflächen der Kupplungselemente aneinander an, so kann hierdurch eine Abdichtung des Bereiches um die Öffnungen der Kupplungselemente herum nach außen gewährleistet werden, so daß Fluiddruck von dem einen Kupplungselement ohne Leckagen nach außen auf das andere Kupplungselement übertragen werden kann.

In vorteilhafter Weiterbildung der Erfindung sind die beiden Kupplungselemente abgesehen von dem Dichtungselement an der Stirnfläche des einen Kupplungselementes weitgehend identisch aufgebaut und spiegelverkehrt zueinander angeordnet.

Durch diese Maßnahme wird der Aufbau der Kupplungsvorrichtung erheblich vereinfacht, da praktisch identische Teile für beide Kupplungselemente verwendet werden können.

Gemäß einer weiteren Ausführung der Erfindung weist die Vorspanneinrichtung des den Fluiddruck liefernden Kupplungselementes eine geringere Rückstellkraft als die Vorspanneinrichtung des anderen Kupplungselementes auf.

Wird die Druckzufuhr unterbrochen, so wird auf diese Weise sichergestellt, daß zunächst der Kolben des anderen Kupplungselements wieder in die Dichtstellung bewegt wird, bevor auch der Kolben des den Fluiddruck liefernden Kupplungselementes geschlossen wird. Somit ist gewährleistet, daß nach dem Trennen der beiden Kupplungselemente Leckagen weitgehend vermieden werden.

Weitere Merkmale und Vorteile der Erfindung ergeben sich aus der nachfolgenden Beschreibung eines bevorzugten Ausführungsbeispiels unter Bezugnahme auf die Zeichnung. Es zeigen:
- Fig. 1: einen Schnitt durch eine erfindungsgemäße Kupplungsvorrichtung, bei der beide Kupplungselemente mit ihren Stirnflächen dichtend aneinander anliegen, sich die beiden Kolben jedoch noch in einer Dichtstellung befinden und
- Fig. 2: einen Schnitt durch die Kupplungsvorrichtung gemäß Fig. 1, bei dem sich die beiden Kolben jedoch in einer Offenstellung befinden, in der ein Fluiddruck von dem ersten Kolben auf den zweiten Kolben übertragen wird.

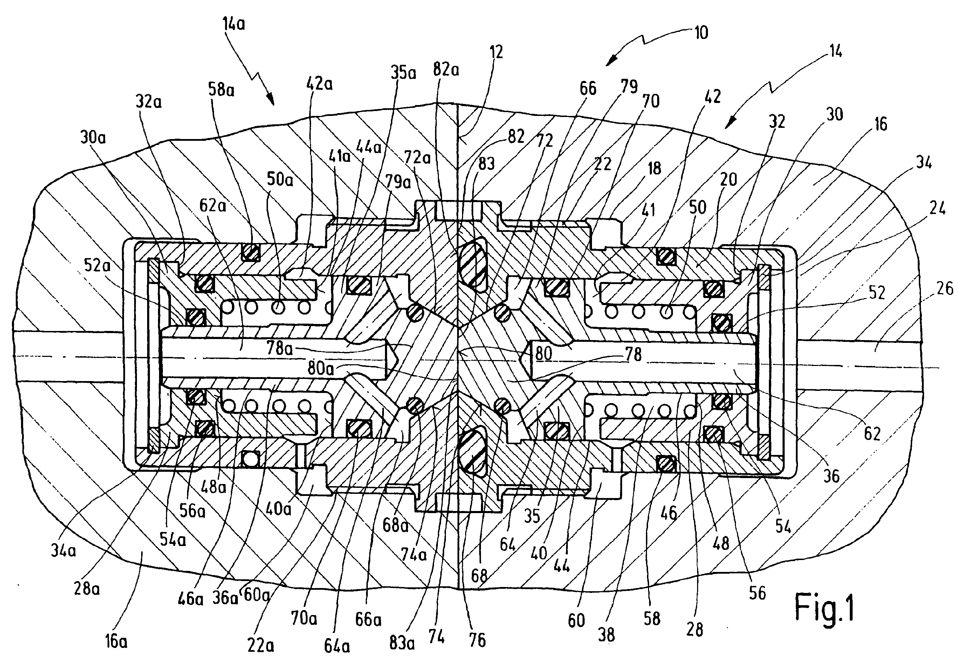

In Fig. 1 ist eine erfindungsgemäße Kupplungsvorrichtung zur Übertragung von Fluiddruck insgesamt mit der Ziffer 10 bezeichnet.

Die Kupplungsvorrichtung 10 umfaßt ein erstes Kupplungselement 14, das einen Fluidkanal 26 besitzt, der aus einer nicht dargestellten Druckquelle mit unter Druck stehendem Fluid gespeist werden kann. Die Kupplungsvorrichtung 10 umfaßt ferner ein zweites Kupplungselement 14a, in dem ein Fluidkanal 26a am gegenüberliegenden rückwärtigen Ende ausgebildet ist, auf den Fluiddruck vom ersten Kupplungselement 14 übertragen werden soll. Das zweite Kupplungselement 14a kann bspw. an einem Spannadapter, einem Spannfutter vorgesehen sein, der aus dem ersten Kupplungselement 14 mit Fluiddruck versorgt werden soll und bei dem das Fluid nach dem Entfernen des ersten Kupplungselementes 14 unter Druck gespeichert werden soll. Es könnte sich bei der zu speisenden Vorrichtung beispielsweise auch um einen Roboter handeln, der mit Druckluft gespeist werden soll.

Die beiden Kupplungselemente 14, 14a sind relativ zueinander beweglich, bspw. ist das erste Kupplungselement 14 stationär, während das zweite Kupplungselement 14a dazu beweglich ist, oder umgekehrt.

Die beiden Kupplungselemente 14, 14a sind an ihrem jeweils zum anderen Kupplungselement weisenden Ende durch eine plane Stirnfläche 82, 82a abgeschlossen. Bei der in Fig. 1 dargestellten Stellung liegen beide Kupplungselemente 14, 14a mit ihren Stirnflächen 82, 82a aneinander an, wobei durch einen Dichtring 76, der in die Stirnfläche 82 des ersten Kupplungselementes 14 eingelassen ist, eine Abdichtung zwischen den beiden Stirnflächen 82, 82a innerhalb des vom Dichtring 76 umschlossenen Bereiches gewährleistet ist.

Abgesehen von diesem Dichtring 76 sind die beiden Kupplungselemente 14, 14a identisch aufgebaut und spiegelsymmetrisch zueinander angeordnet.

Es wird daher zunächst der Aufbau des ersten Kupplungselementes 14 beschrieben, während beim zweiten Kupplungselement 14a lediglich auf Unterschiede zum ersten Kupplungselement 14 eingegangen wird.

Für entsprechende Teile des zweiten Kupplungselementes 14a werden entsprechende Bezugsziffern wie beim ersten Kupplungselement 14 verwendet, jeweils gefolgt von a.

Innerhalb des ersten Kupplungselementes 14 befindet sich eine annähernd zylindrische Ausnehmung 18, deren Wandung mit verschiedenen Stufen versehen ist. Durch diese Ausnehmung 18 ist ein Hohlraum im Grundkörper 16 des ersten Kupplungselementes 14 gebildet, der an seinem rückwärtigen, dem anderen Kupplungselement 14a gegenüberliegenden Ende durch eine Stirnfläche 24 begrenzt ist. In diese Stirnfläche 24 mündet der bereits erwähnte Fluidkanal 26, der mit einer Fluid-Druckquelle, z.B. einem Hydraulikdruckspeicher, verbindbar ist.

In ein Gewinde 22 an der Wandung der Ausnehmung 18 ist ein Kupplungseinsatz 20 eingeschraubt, der an seinem rückwärtigen, der Stirnfläche 24 zugewandten Ende offen ist und in dem ein annähernd zylindrischer Hohlraum 42 vorgesehen ist, der an seiner dem zweiten Kupplungselement 14a zugewandten Seite durch eine konisch ausgebildete Dichtfläche 72 abgeschlossen ist, die in einer Öffnung 83 an der Stirnfläche 82 ausmündet.

Um eine Leckage von Fluid aus der Ausnehmung 18 im Grundkörper 16 an der Stirnfläche 82 zu vermeiden, ist der Kupplungseinsatz 20 gegenüber dem Grundkörper 16 durch eine Dichtung, etwa in Form eines O-Rings 58 abgedichtet.

Innerhalb des Hohlraums 42 ist ein Kolben 35 in Axialrichtung beweglich geführt. Der Kolben 35 weist an seinem dem anderen Kupplungselement 14a zugewandten Ende einen Kopfabschnitt 78 auf, dessen dem anderen Kupplungselement 14a zugewandte Außenseite mit einem Außenkonus versehen ist, der als Gegenfläche 74 zu der Dichtfläche 72 des Kupplungseinsatzes wirkt. Der Kopfabschnitt 78 ist an seinem äußeren, dem anderen Kupplungselement 14a zugewandten Ende durch eine ebene Kopffläche 80 abgeschlossen, die in der in Fig. 1 dargestellten Dichtstellung, in der der Kolben 35 mit seiner Gegenfläche 74 an der Dichtfläche 72 des Kupplungseinsatzes 20 anliegt, weitgehend bündig mit der Stirnfläche des Kupplungseinsatzes 20 abschließt. An den Kopfabschnitt 78 schließt sich ein Flanschabschnitt 79 mit größerem Durchmesser an, mit dem der Kolben 35 an der Wandung 44 des Hohlraums 42 geführt ist. Der Flanschabschnitt 79 ist an seiner dem anderen Kupplungselement 14a abgewandten Rückseite durch eine Radialfläche 40 begrenzt, von der aus sich ein hohlzylindrischer Fortsatz 36 in Richtung zum Fluidkanal 26 erstreckt. In die hintere Hälfte des Hohlraums 42 ist ein topfförmiges Abschlußelement 28 eingesetzt und an seinem hinteren Ende mittels eines Radialvorsprungs 30, der an einem Absatz 32 der Wandung 44 anliegt, mit einem Sicherungsring 34 festgelegt. Das topfförmige Abschlußelement 28 ist an seiner zum anderen Kupplungselement 14a weisenden Seite offen und ist von einer zentralen Bohrung 52 durchsetzt, in der der Kolben 35 mit der Außenoberfläche 46 seines hohlzylindrischen Fortsatzes 36 geführt und mittels eines O-Rings 54 abgedichtet ist.

Im Kolben 35 ist ein zentraler Fluidkanal 62 vorgesehen, der als Sacklochbohrung ausgebildet ist, die sich durch den hohlzylindrischen Fortsatz 36 erstreckt und im Bereich des Kopfabschnittes 78 endet. Dieser zentrale Fluidkanal 62 ist über zwei schräge Verbindungskanäle 64 mit einem Stauraum 66 verbunden, der zwischen der Wandung 44, dem Flanschabschnitt 79 und dem Beginn der Gegenfläche 74 am Kopfabschnitt 78 gebildet ist.

Somit stehen in der in Fig. 1 dargestellten Dichtstellung der Fluidkanal 26 über den zentralen Fluidkanal 62 des Kolbens 35 und die Fluidkanäle 64 mit dem Stauraum 66 in Verbindung.

In der in Fig. 1 dargestellten Dichtstellung ist dieser Stauraum 66 in Richtung auf die Öffnung 83 der Stirnfläche 82 durch die an der Dichtfläche 72 anliegende Gegenfläche 74 des Kopfes 78 abgedichtet, wobei durch einen in den Kopfabschnitt 78 eingelassenen O-Ring 68 eine zuverlässige Abdichtung gewährleistet ist. Der Stauraum 66 ist zum rückwärtigen Ende hin durch den Flanschabschnitt 79 des Kopfabschnittes 78 abgedichtet, wobei durch einen in die Außenoberfläche des Flanschabschnittes 79 eingelassenen Dichtring 70, der an der Wandung 44 des Hohlraums 42 anliegt, eine zuverlässige Abdichtung gewährleistet ist.

Der Kolben 35 ist, wie bereits erwähnt, mit seinem Flanschabschnitt 79 an der Wandung 44 des Hohlraums 42, sowie mit der Außenoberfläche 46 seines hohlzylindrischen Fortsatzes 36 in der Bohrung 52 des topfförmigen Abschlußelementes 28 geführt.

Während die Bewegung des Kolbens 35 in Richtung auf das zweite Kupplungselement 14a durch Anlage des O-Ringes 68 und der Gegenfläche 74 an der Dichtfläche 72 begrenzt ist, ist die Bewegung des Kolbens 35 in die entgegengesetzte Richtung durch eine Anschlagfläche 41 begrenzt, die den Abschluß des topfförmigen Abschlußelementes 28 bildet und an der der Flanschabschnitt 79 mit seiner rückwärtigen Radialfläche 40 anschlagen kann.

Zwischen der Radialfläche 40 des Flanschabschnittes 79 und dem gegenüberliegenden Ende des topfförmigen Abschlußelementes 28 ist ein Federelement 50 in Form einer Spiralfeder eingeschlossen, durch die der Kolben 35 in Richtung auf das andere Kupplungselement 14a vorgespannt ist.

Um eine Leckage von Fluid aus dem Fluidkanal 26 in einen Auffangraum 38 zu vermeiden, der zwischen der Radialfläche 40 des Flanschabschnittes 79 und dem topfförmigen Abschlußelement 28 gebildet ist, ist das topfförmige Abschlußelement 28 an seiner Außenwandung durch eine Dichtung, etwa in Form eines O-Rings 56, gegenüber der Wandung 44 des Hohlraums 42 abgedichtet. Sollte dennoch Fluid in den Auffangraum 38 gelangen, so kann dies über einen Ableitkanal 60 nach außen in einen Fluidsumpf abgeführt werden.

Wie bereits erwähnt, ist abgesehen von zwei nachfolgend noch zu erläuternden Abweichungen das zweite Kupplungselement 14a vollständig identisch zum ersten Kupplungselement 14 aufgebaut und spiegelsymmetrisch dazu angeordnet. Es wird daher auf eine Wiederholung der Beschreibung des Aufbaus des zweiten Kupplungselementes 14a verzichtet, bei dem entsprechende Teile mit entsprechenden Bezugsziffern gefolgt von a gekennzeichnet sind.

Die erste Abweichung zum ersten Kupplungselement 14 besteht darin, daß der Dichtring 76 lediglich in die Stirnfläche 82 des ersten Kupplungselementes 14 eingelassen ist, daß in der Stirnfläche 82a des zweiten Kupplungselementes 14a jedoch kein derartiger Dichtring vorhanden ist.

Die zweite Abweichung besteht darin, daß das Federelement 50 des ersten Kupplungselementes 14 eine etwas geringere Federkraft als das Federelement 50a des zweiten Kupplungselementes 14a aufweist, was bei sonst gleichen Abmessungen etwa durch eine geringere Federkonstante erreicht werden kann.

Die Funktionsweise der Kupplungsvorrichtung 10 wird nunmehr im folgenden erläutert.

In der in Fig. 1 dargestellten Stellung wurden beide Kupplungselemente 14, 14a aufeinander zu bewegt, bis beide Stirnflächen 82, 82a in einer Trennebene 12 aneinander anliegen, wobei durch eine geeignete Führung in Radialrichtung sichergestellt ist, daß die beiden Öffnungen 83, 83a annähernd miteinander fluchten. Infolge der erfindungsgemäßen Konstruktion ist eine genaue radiale Ausrichtung nicht erforderlich; es reicht, wenn radiale Positionierungsfehler von mehr als etwa 2 mm vermieden werden.

In der in Fig. 1 dargestellten Dichtstellung ist der Bereich um die beiden Öffnungen 83, 83a herum durch den Dichtring 76, der gegen die Stirnfläche 82a des zweiten Kupplungselementes 14a gepreßt ist, abgedichtet.

Ist der Fluidkanal 26 drucklos, etwa weil ein entsprechendes Ventil einer Verbindung mit einem Druckreservoir geschlossen ist, so wird der Kolben 35 durch die Feder 50 mit seiner Gegenfläche 74 gegen die Dichtfläche 72 gepreßt, so daß kein Fluid durch die Öffnung 83 austreten kann. In dieser Stellung kann auch der Fluidkanal 26a des anderen Kupplungselementes 14a drucklos sein oder aber bereits ein erhöhtes Druckniveau einhalten, das bspw. durch eine früher erfolgte Druckübertragung erhalten wurde. In beiden Fällen ist der Kolben 35a durch seine Feder 50a in der Dichtstellung gehalten.

Soll nunmehr Fluid unter Druck vom ersten Kupplungselement 14 auf das zweite Kupplungselement 14a übertragen werden, so muß hierzu lediglich die Druckzufuhr zum Fluidkanal 26 geöffnet werden.

Das Fluid tritt nunmehr über den Fluidkanal 26 in den zentralen Fluidkanal 62 des Kolbens 35 ein und über die seitlichen Verbindungskanäle 64 in den Stauraum 66.

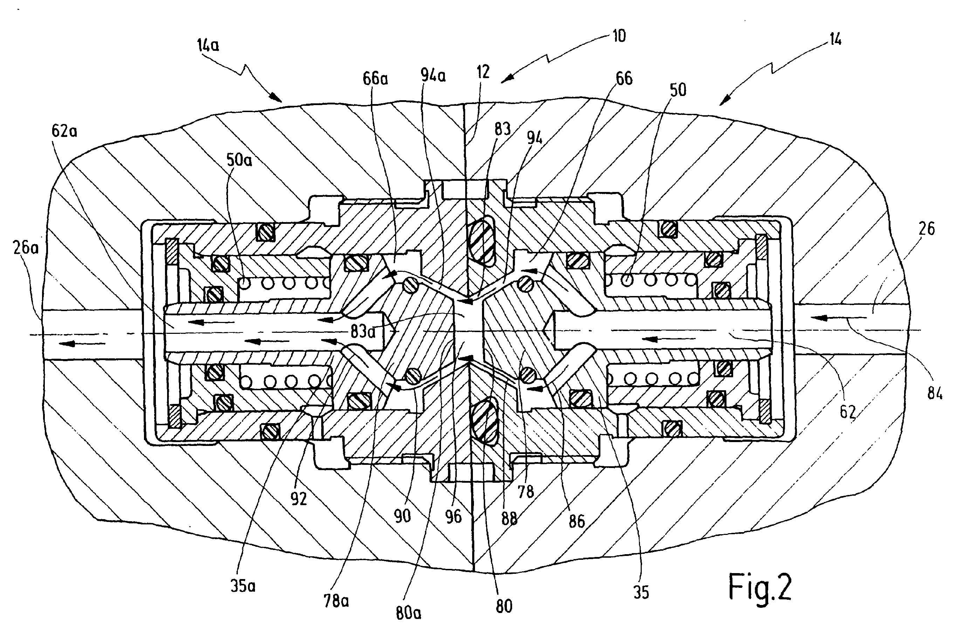

Ist nunmehr der Fluiddruck im Stauraum 66 ausreichend groß, um die Kraft des Federelementes 50 zu überwinden, so bewegt sich der Kolben 35 nach rechts, bis dieser mit seiner Radialfläche 40 an der Anschlagfläche 41 des topfförmigen Abschlußelementes 28 anschlägt. Durch die axiale Verschiebung des Kolbens 35 entsteht ein Spalt 94 zwischen der Dichtfläche und der Gegenfläche. Dadurch kann nunmehr gemäß Fig. 2 Fluid in Richtung der Pfeile 84, 86, 88 in Richtung auf die Kopffläche 80a des Kolbens 35a des zweiten Kupplungselementes 14a austreten. Der Fluiddruck wirkt somit im Zwischenraum 96 zwischen den beiden Kopfflächen 80, 80a, so daß eine entsprechende Kraft in Axialrichtung auf den Kolben 35a ausgeübt wird. Ist der Fluiddruck im Fluidkanal 26 und damit im Zwischenraum 96 ausreichend hoch, so daß die Kraft des Federelementes 50a überwunden wird, so bewegt sich der Kolben 35a gemäß Fig. 2 nach links, so daß nunmehr ungehindert Fluid in Richtung der Pfeile 90, 92 in den Fluidkanal 26a des zweiten Kupplungselementes 14a fließen kann. Auf diese Weise kann nunmehr der Fluiddruck im Fluidkanal 26a bis auf einen vorgegebenen Solldruck erhöht werden.

Wird nunmehr die Fluidzufuhr durch den Kanal 26 des ersten Kupplungselementes 14 gestoppt, etwa indem ein entsprechendes Ventil geschlossen wird, so bewegt sich zunächst der Kolben 35a unter Wirkung des Federelementes 50a nach rechts bis in die Dichtstellung, so daß der Spalt 94a zwischen Dichtfläche 72a und Gegenfläche 74a geschlossen wird. Wegen der etwas geringeren Federkraft der Feder 50 bewegt sich der Kolben 35 des ersten Kupplungselementes mit einer gewissen Zeitverzögerung in die Dichtstellung, so daß ein weiterer Austritt von Fluid über die Öffnung 83 unterbunden ist.

Die beiden Kupplungselemente 14, 14a können nunmehr an der Trennlinie 12 voneinander getrennt werden, wobei die Abdichtung durch die beiden Kolben 35, 35a selbsttätig gewährleistet bleibt.

## Patentansprüche

1. Kupplungsvorrichtung zur Übertragung von Fluiddruck von einem ersten Kupplungselement (14) der Kupplungsvorrichtung auf ein zweites Kupplungselement (14a) der Kupplungsvorrichtung, wobei beide Kupplungselemente (14, 14a) einander zugewandte Stirnflächen (82, 82a) aufweisen, die gegeneinander bewegbar sind, und wobei jedes der Kupplungselemente (14, 14a) einen Hohlraum (42, 42a) aufweist, der in einer Öffnung (83, 83a) an der Stirnfläche (82, 82a) mündet und mit dem Hohlraum (42, 42a) des anderen Kupplungselementes (14, 14a) zur Übertragung von Fluiddruck koppelbar ist, wobei in jedem der Hohlräume (42, 42a) ein Kolben (35, 35a) in Axialrichtung beweglich geführt ist, wobei die beiden Hohlräume (42, 42a) an der dem jeweils anderen Kupplungselement (14, 14a) zugewandten Seite eine Dichtfläche (72, 72a) aufweisen, die mit der Öffnung (83, 83a) der Stirnfläche (82, 82a) verbunden ist und gegen die der Kolben (35, 35a) mit einer Gegenfläche (74, 74a) abdichtbar ist, wobei jeder der beiden Kolben (35, 35a) in Richtung auf den anderen Kolben (35, 35a) durch eine Vorspanneinrichtung (50, 50a) auf eine Dichtstellung hin vorgespannt ist, in der der Kolben (35, 35a) jeweils mit seiner Dichtfläche (72, 72a) an der Gegenfläche (74, 74a) anliegt, und wobei Mittel (64, 66, 64a, 66a) zur Bewegung mindestens eines Kolbens (35, 35a) entgegen der Wirkung der Vorspanneinrichtung (50, 50a) in Richtung auf eine Offenstellung vorgesehen sind, in der ein Fluiddurchlaß zur Übertragung von Fluiddruck durch den Hohlraum (42, 42a) und die Öffnung (83) in der Stirnfläche (82) des einen Kupplungselements (14) in die Öffnung (83a) an der Stirnfläche (82a) des anderen Kupplungselementes (14a) freigegeben ist, **dadurch gekennzeichnet, daß** die Mittel (64, 66, 64a, 66a) einen Stauraum (66, 66a) umfassen, der derart angeordnet und dimensioniert ist, daß ausschließlich durch eine Beaufschlagung mit einem Fluiddruck ausreichender Größe eine Bewegung des im Hohlraum (42) des ersten Kupplungselements (14) geführten Kolbens (35) entgegen der Wirkung der Vorspanneinrichtung (50) in die Offenstellung bewirkt wird.

2. Kupplungsvorrichtung nach Anspruch 1, **dadurch gekennzeichnet, daß** an zumindest einem der beiden Kupplungselemente (14, 14a) der Kolben (35, 35a) an seinem dem anderen Kupplungselement (14, 14a) zugewandten Ende durch einen Kopfabschnitt (78, 78a) abgeschlossen ist, an dem seitlich die mit der Dichtfläche (72, 72a) zusammenwirkende Gegenfläche (74, 74a) ausgebildet ist, und der stirnseitig durch eine Kopffläche (80, 80a) abgeschlossen ist, die dem anderen Kupplungselement (14, 14a) zugewandt ist.

3. Kupplungsvorrichtung nach Anspruch 1 oder 2, **dadurch gekennzeichnet, daß** die Kopffläche (80, 80a) in der Dichtstellung annähernd bündig mit oder versenkt gegenüber der Stirnfläche (82, 82a) des Kupplungselementes (14, 14a) angeordnet ist.

4. Kupplungsvorrichtung nach einem der vorhergehenden Ansprüche, **dadurch gekennzeichnet, daß** bei zumindest einem der beiden Kupplungselemente (14, 14a) der Kolben (35, 35a) einen zentralen Fluidkanal (62, 62a) aufweist, der über mindestens einen Verbindungskanal (64, 64a) mit dem Stauraum (66, 66a) in Verbindung steht, der zwischen der Wandung (44, 44a) des Hohlraums (42, 42a) und dem Kolben (35, 35a) gebildet ist, um bei Beaufschlagung mit Fluiddruck eine Bewegung des Kolbens (35, 35a) entgegen der Wirkung der Vorspanneinrichtung (50, 50a) in die Offenstellung zu bewirken, in der ein Fluiddurchlaß aus dem zentralen Fluidkanal (62, 62a) über den Verbindungskanal (64, 64a), den Stauraum (66, 66a) und einen Spalt (94) zwischen der Dichtfläche (72, 72a) und der Gegenfläche (74, 74a) zur Öffnung an der Stirnfläche (82, 82a) des anderen Kupplungselementes (14, 14a) besteht.

5. Kupplungsvorrichtung nach einem der vorhergenden Ansprüche, **dadurch gekennzeichnet, daß** an zumindest einem der beiden Kupplungselemente (14, 14a) die Vorspanneinrichtung als Federelement (50, 50a) ausgebildet ist, das zwischen dem Kolben (35, 35a) und einem auf der dem anderen Kupplungselement (14, 14a) abgewandten Seite an der Wandung (44, 44a) des Hohlraums (42, 42a) festgelegten Abschlußelement (28, 28a) eingespannt ist.

6. Kupplungsvorrichtung nach Anspruch 5, **dadurch gekennzeichnet, daß** das Abschlußelement (28, 28a) an seiner dem anderen Kupplungselement (14, 14a) zugewandten Seite eine Anschlagfläche (41, 41a) aufweist, die mit einer dieser zugewandten Radialfläche (40, 40a) des Kolbens (35, 35a) zusammenwirkt, um die Bewegung des Kolbens (35, 35a) entgegen der Wirkung der Vorspanneinrichtung (50, 50a) zu begrenzen.

7. Kupplungsvorrichtung nach Anspruch 5 oder 6, **dadurch gekennzeichnet, daß** an zumindest einem der Kupplungselemente (14, 14a) der Kolben (35, 35a) an seinem dem anderen Kupplungselement (14, 14a) abgewandten Ende einen hohlzylindrischen Fortsatz (36, 36a) aufweist, dessen Außenoberfläche (46, 46a) in einer Bohrung (52, 52a) des Abschlußelementes (28, 28a) verschiebbar und gegenüber diesem abgedichtet geführt ist.

8. Kupplungsvorrichtung nach einem der vorhergenden Ansprüche, **dadurch gekennzeichnet, daß** an zumindest einem der Kupplungselemente (14, 14a) die Dichtfläche (72, 72a) am Ende des Hohlraums (42, 42a) als Innenkonusfläche ausgebildet ist, die sich an den Stauraum (66, 66a) anschließt und in der Öffnung (83, 83a) an der Stirnfläche (82, 82a) des Kupplungselementes (14, 14a) mündet, und daß die Gegenfläche (74, 74a) des Kolbens (35, 35a) als entsprechend geformte konusförmige Außenfläche ausgebildet ist.

9. Kupplungsvorrichtung nach einem der vorhergehenden Ansprüche, **dadurch gekennzeichnet, daß** an zumindest einem der Kupplungselemente (14, 14a) der Hohlraum (42, 42a) in einem Kupplungseinsatz (20, 20a) ausgebildet ist, der in einer Ausnehmung (18, 18a) eines Grundkörpers (16, 16a) aufgenommen ist.

10. Kupplungsvorrichtung nach einem der vorhergehenden Ansprüche, **dadurch gekennzeichnet, daß** an einem der beiden Kupplungselemente (14, 14a) an der Stirnfläche (82, 82a) ein Dichtungselement (76), vorzugsweise ein Dichtring, vorgesehen ist, das den Bereich um die beiden Öffnungen (83, 83a) herum in der Dichtstellung nach außen abdichtet.

11. Kupplungsvorrichtung nach Anspruch 10, **dadurch gekennzeichnet, daß** die beiden Kupplungselemente (14, 14a) abgesehen von dem Dichtungselement (76) an der Stirnfläche (82) des einen Kupplungselementes (14) weitgehend identisch aufgebaut und spiegelverkehrt zueinander angeordnet sind.

12. Kupplungsvorrichtung nach einem der vorhergehenden Ansprüche, **dadurch gekennzeichnet, daß** die Vorspanneinrichtung (50) des den Fluiddruck liefernden Kupplungselementes (14) eine geringere Rückstellkraft als die Vorspanneinrichtung (50a) des anderen Kupplungselements (14a) aufweist.

## Claims

1. Coupling device for transmitting fluid pressure from a first coupling element (14) of the coupling device to a second coupling element (14a) of the coupling device, with both coupling devices (14, 14a) presenting mutually facing faces (82, 82a) mobile relative to each other, wherein each of said coupling elements (14, 14a) includes a cavity (42, 42a) opening in an aperture (83, 83a) on said face (82, 82a) and being adapted to be coupled to the cavity (42, 42a) of the other coupling element (14a, 14a) for transmitting a fluid pressure, wherein a piston (35, 35a) is guided for movement in an axial direction in each of said cavities (42, 42a), wherein said two cavities (42, 42a) present a sealing surface (72, 72a) on their side facing the respective other coupling element (14, 14a), which sealing surface is connected to said aperture (83, 83a) in said face (82, 82a) and from which said piston (35, 35a) may be sealed by means of a mating surface (74, 74a), wherein each of said two pistons (35, 35a) is biased in a direction towards the respective other piston (35, 35a) by means of a biasing means (50, 50a) into a sealing position in which said piston (35, 35a) bears by its respective sealing surface (72, 72a) against said mating surface (74, 74a), and wherein means (64, 66, 64a, 66a) are provided for moving at least one piston (35, 35a) in opposition to the action of said biasing means (50, 50a) in a direction towards an open position in which a fluid duct is released for transmission of a fluid pressure through said cavity (42, 42a) and said aperture (83) in said face (82) of said one coupling element (14) into said aperture (83a) on said face (82a) of the other coupling element (14a), **characterised in that** said means (64, 66, 64a, 66a) comprise a storage capacity (66, 66a) that is so disposed and dimensioned that a movement of said piston (35) guided in said cavity (42) of said first coupling element (14), in opposition to the action of said biasing means (50), into the open position is realised exclusively by application of a fluid pressure of a sufficient magnitude.

2. Coupling device according to Claim 1, **characterised in that** on at least one of said two coupling elements (14, 14a), said piston (35, 35a) is terminated, on its end facing said other coupling element (14, 14a), by a head section (78, 78a) on which said mating surface (74, 74a) laterally cooperating with said sealing surface (72, 72a) is formed, and which is terminated on its face by a head surface (80, 80a) that faces said other coupling element (14, 14a).

3. Coupling device according to Claim 1 or 2, **characterised in that**, in the sealing position, said head surface (80, 80a) is approximately flush with or arranged in a sunk position relative to said face (82, 82a) of said coupling element (14, 14a).

4. Coupling device according to any of the preceding Claims, **characterised in that** on at least one of said two coupling elements (14, 14a), said piston (35, 35a) presents a central fluid duct (62, 62a) communicating with said storage capacity (66, 66a) via at least one connecting duct (64, 64a), which is formed between the wall (44, 44a) of said cavity (42, 42a) and said piston (35, 35a) in response to the application of a fluid pressure, in order to cause a movement of said piston (35, 35a) in opposition to the action of said biasing means (50, 50a) into the open position in which there is a fluid passage from said central fluid duct (62, 62a) via said connecting duct (64, 64a), said storage capacity (66, 66a) and a gap (94) between said sealing surface (72, 72a) and said mating surface (74, 74a) to the aperture on said face (82, 82a) of said other coupling element (14, 14a).

5. Coupling device according to any of the preceding Claims, **characterised in that** on at least one of said two coupling elements (14, 14a), said biasing means is configured as a spring element (50, 50a) that is clamped between said piston (35, 35a) and a closing element (28, 28a) fixed on the wall (44, 44a) of said cavity (42, 42a) on the side turned away from said other coupling element (14, 14a).

6. Coupling device according to Claim 5, **characterised in that** said closing element (28, 28a), on its side facing said other coupling element (14, 14a), presents a stop surface (41, 41a) cooperating with a radial surface (40, 40a) of said piston (35, 35a), which faces it, so as to limit the movement of said piston (35, 35a) in opposition to the action of said biasing means (50, 50a).

7. Coupling device according to Claim 5 or 6, **characterised in that** on at least one of said coupling elements (14, 14a), said piston (35, 35a) presents an extension (36, 36a) in the form of a hollow cylinder on its end turned away from said other coupling element (14, 14a), with the outer surface (46, 46a) of said extension being displaceable in a bore (52, 52a) of said closing element (28, 28a) and being guided therein in a state sealed from that element.

8. Coupling device according to any of the preceding Claims, **characterised in that** on at least one of said coupling elements (14, 14a), said sealing surface (72, 72a) is formed on the end of said cavity (42, 42a) as interior conical surface that joins said storage capacity (66, 66a) and opens into the aperture (83, 83a) on said face (82, 82a) of said coupling element (14, 14a), and that the mating surface (74, 74a) of said piston (35, 35a) is configured as conical exterior surface of corresponding shape.

9. Coupling device according to any of the preceding Claims, **characterised in that** on at least one of said coupling elements (14, 14a), said cavity (42, 42a) is formed in a coupler insert (20, 20a) that is received in a recess (18, 18a) of a body (16, 16a).

10. Coupling device according to any of the preceding Claims, **characterised in that** on one of said two coupling elements (14, 14a), on said face (82, 82a), a sealing element (76), preferably a sealing ring, is provided that seals the zone around said two apertures (83, 83a) in the sealing position to the outside.

11. Coupling device according to Claim 10, **characterised in that**, with the exception of said sealing element (76) on said face (82) of one (14) of said coupling elements, said two coupling elements (14, 14a) present a largely identical structure and are disposed in a mirror-inverted arrangement relative to each other.

12. Coupling device according to any of the preceding Claims, **characterised in that** said biasing means (50) of the coupling element (14) supplying the fluid pressure has a restoring force lower than that of said biasing means (50a) of said other coupling element (14a).

## Revendications

1. Dispositif d'accouplement à transmettre une pression d'un fluide d'un premier élément coupleur (14) du dispositif d'accouplement à un deuxième élément coupleur (14a) du dispositif d'accouplement, auxdits deux éléments coupleurs d'accouplements (14, 14a) présentant des faces (82, 82a) mobiles l'une relativement à l'autre, qui se trouvent en face, dans lequel chacun desdits éléments coupleurs (14, 14a) renferme une cavité (42, 42a) s'ouvrant dans une embouchure (83, 83a) sur ladite face (82, 82a) et étant apte à être couplée à la cavité (42, 42a) de l'autre élément coupleur (14a, 14a) à transmettre une pression d'un fluide, dans lequel un piston (35, 35a) est guidé pour un mouvement en sens axial dans chacune desdits cavités (42, 42a), dans lequel lesdites deux cavités (42, 42a) présentent une surface d'étanchéité (72, 72a) sur leur côtés en face de l'autre élément coupleur respectif (14, 14a), cette surface d'étanchéité étant raccordée à ladite embouchure (83, 83a) dans ladite face (82, 82a) et relativement à laquelle on peut étancher ledit piston (35, 35a) moyennant une surface antagoniste (74, 74a), dans lequel chacun desdits deux pistons (35, 35a) est mis en précontrainte en un sens vers l'autre piston respectif (35, 35a) par un moyen de précontrainte (50, 50a) dans une position d'étanchéité, dans laquelle ledit piston (35, 35a) porte, par sa surface d'étanchéité respective (72, 72a), contra ladite surface antagoniste (74, 74a), et dans lequel des moyens (64, 66, 64a, 66a) sont disposés pour le mouvement d'au moins un piston (35, 35a) à l'encontre de l'action dudit moyen de précontrainte (50, 50a) en un sens vers une position ouverte, dans laquelle un conduit de fluide est dégagé pour la transmission d'une pression d'un fluide à travers ladite cavité (42, 42a) et ladite embouchure (83) dans ladite face (82) dudit un élément coupleur (14) dans ladite embouchure (83a) sur ladite face (82a) de l'autre élément coupleur (14a), **caractérisé en ce que** lesdits moyens (64, 66, 64a, 66a) comprennent une capacité de retenue (66, 66a), qui est disposée et dimensionnée d'une telle manière, qu'un mouvement dudit piston (35) guidé dans ladite cavité (42) dudit premier élément coupleur (14), à l'encontre de l'action dudit moyen de précontrainte (50), en une position ouverte soit réalisé exclusivement par l'application d'une pression d'un fluide à un niveau suffisant.

2. Dispositif d'accouplement selon la revendication 1, **caractérisé en ce que** sur au moins un desdits deux éléments coupleurs (14, 14a), ledit piston (35, 35a) est terminé, à son extrémité en face dudit autre élément coupleur (14, 14a), par une partie de tête (78, 78a) sur laquelle ladite surface antagoniste (74, 74a) en coopération avec ladite surface d'étanchéité (72, 72a) latéralement est formée et qui est terminée, du côté de sa face, par une surface de tête (80, 80a) qui se trouve en face dudit autre élément coupleur (14, 14a).

3. Dispositif d'accouplement selon la revendication 1 ou 2, **caractérisé en ce que**, en position d'étanchéité, ladite surface de tête (80, 80a) est à fleur environ de ladite face ou disposée en position affleurée relativement à ladite face (82, 82a) dudit élément coupleur (14, 14a).

4. Dispositif d'accouplement selon une quelconque des revendications précédentes, **caractérisé en ce qu'**à au moins un desdits deux éléments coupleurs (14, 14a), ledit piston (35, 35a) présente un conduit de fluide central (62, 62a) en communication avec ladite capacité de retenue (66, 66a) via au moins un conduit de raccord (64, 64a), qui st formé entre la paroi (44, 44a) de ladite cavité (42, 42a) et ledit piston (35, 35a), en réponse à l'application d'une pression d'un fluide, afin d'induire un mouvement dudit piston (35, 35a) à l'encontre de l'action dudit moyen de précontrainte (50, 50a), en la position ouverte, dans laquelle il y a un passage de fluide en dehors dudit conduit de fluide (62, 62a) central ledit conduit de raccord (64, 64a), ladite capacité de retenue (66, 66a) et une fente (94) entre ladite surface d'étanchéité (72, 72a) et ladite surface antagoniste (74, 74a) dans l'embouchure dans ladite face (82, 82a) dudit autre élément coupleur (14, 14a).

5. Dispositif d'accouplement selon une quelconque des revendications précédentes, **caractérisé en ce qu'**à au moins un desdits deux éléments coupleurs (14, 14a), ledit moyen de précontrainte est configuré sous forme d'un élément ressort (50, 50a) qui est serré entre ledit piston (35, 35a) et un élément de fermeture (28, 28a) fixé à la paroi (44, 44a) de ladite cavité (42, 42a) du côté opposé audit autre élément coupleur (14, 14a).

6. Dispositif d'accouplement selon la revendication 5, **caractérisé en ce que** ledit élément de fermeture (28, 28a), de son côté en face dudit autre élément coupleur (14, 14a), présente une surface d'arrêt (41, 41a) coopérant avec une surface radiale (40, 40a) dudit piston (35, 35a), qui se trouve en face, afin de limiter le mouvement dudit piston (35, 35a) à l'encontre de l'action dudit moyen de précontrainte (50, 50a).

7. Dispositif d'accouplement selon la revendication 5 or 6, **caractérisé en ce qu'**à au moins un desdits éléments coupleurs (14, 14a), ledit piston (35, 35a) présente un prolongement (36, 36a) sous forme d'un cylindre creux de sa extrémité opposée audit autre élément coupleur (14, 14a), à la surface extérieure (46, 46a) dudit prolongement étant déplaçable dans un alésage (52, 52a) dudit élément de fermeture (28, 28a) et étant y guidé en un état étanche relativement à cet élément.

8. Dispositif d'accouplement selon une quelconque des revendications précédentes, **caractérisé en ce qu'**à au moins un desdits éléments coupleurs (14, 14a), ladite surface d'étanchéité (72, 72a) est formée à l'extrémité de ladite cavité (42, 42a) en tant que surface conique intérieure, qui se joigne à ladite capacité de retenue (66, 66a) et s'ouvre dans ladite embouchure (83, 83a) dans ladite face (82, 82a) dudit élément coupleur (14, 14a), et **en ce que** la surface antagoniste (74, 74a) dudit piston (35, 35a) est configurée en tant que surface conique extérieure en forme correspondante.

9. Dispositif d'accouplement selon une quelconque des revendications précédentes, **caractérisé en ce qu'**à au moins un desdits éléments coupleurs (14, 14a), ladite cavité (42, 42a) est formée dans un insert de coupleur (20, 20a) qui est reçu dans un creux (18, 18a) d'un corps (16, 16a).

10. Dispositif d'accouplement selon une quelconque des revendications précédentes, **caractérisé en ce qu'**à au moins un desdits deux éléments coupleurs (14, 14a), à ladite face (82, 82a), un élément d'étanchéité (76), de préférence un anneau d'étanchéité, est disposé, qui rend étanche la zone autour desdits deux embouchures (83, 83a) dans la position d'étanchéité vers l'extérieur.

11. Dispositif d'accouplement selon la revendication 10, **caractérisé en ce qu'**à l'exception dudit élément d'étanchéité (76) à ladite face (82) d'un (14) desdits éléments coupleurs, lesdits deux éléments coupleurs (14, 14a), présentent une structure largement identique et sont disposés en un arrangement symétrique inverse l'un relativement à l'autre.

12. Dispositif d'accouplement selon une quelconque des revendications précédentes, **caractérisé en ce que** ledit moyen de précontrainte (50) de l'élément coupleur (14) alimentant la pression d'un fluide est muni d'un effort de retour, qui est plus faible que l'effort dudit moyen de précontrainte (50a) dudit autre élément coupleur (14a).
